Europäisches Patentamt

European Patent Office

Office européen des brevets

(11) Publication number: **0 229 441**

**A2**

(12) **EUROPEAN PATENT APPLICATION**

(21) Application number: **86303686.9**

(22) Date of filing: **14.05.86**

(51) Int. Cl.⁴ **B29C 37/00 , B29C 43/20**

(30) Priority: **10.01.86 US 817719**

(43) Date of publication of application:
**22.07.87 Bulletin 87/30**

(84) Designated Contracting States:
**AT BE CH DE FR GB IT LI LU NL SE**

(71) Applicant: **GROUP LOTUS PLC**

**Norwich Norfolk NR14 8EZ(GB)**

(72) Inventor: **Adams, Alfred Arthur
"Parnassus" Woodland Drive
Bungay Suffolk(GB)**

(74) Representative: **Ackroyd, Robert (GB) et al
c/o G. RATHBONE & CO High Holborn House
52-54 High Holborn
London WC1V 6RY(GB)**

(54) Method of moulding an article.

(57) A two-part mould 1, 2 for moulding an article has the mould parts adapted to be moved together under vacuum to cause moulding material 14 to be evenly distributed around a reinforcement structure. A finish coating of paint or the like is applied to the article during the moulding process by coating the mould interior and partially curing the coated material before introduction of the moulding material. Coating of the interior of one or both mould parts may be effected to produce articles coated on one or both surfaces. If desired, a plurality of coating and partial curing steps may be employed.

FIG.1

EP 0 229 441 A2

## METHOD OF MOULDING AN ARTICLE

The invention lies in the field of moulding and is particularly but not exclusively concerned with the moulding of an article in synthetic resin material, with or without a reinforcement structure, for example fibre reinforcement.

United Kingdom Patent Specification GB 1432333 discloses a method of moulding an article, the method having the step of applying a vacuum to a cavity defined between separate male and female mould parts having sealing means therebetween, the cavity containing a hardenable liquid moulding material, thereby drawing the mould parts together with relative movement thereof at the sealing means, and causing the moulding material to flow in the cavity into the shape of the article to be moulded.

The specification referred to also discloses a mould for moulding an article, the mould comprising a male and female mould part shaped to be assembled to define a cavity therebetween, a seal for sealing the cavity against atmosphere, and an aperture in one of the mould parts for application of a vacuum to the cavity, the mould parts and the seal being arranged to permit drawing of the mould parts together with relative movement thereof at the seal, and flow of hardenable liquid mould material in the cavity into the shape of the article to be moulded, in response to the application of the vacuum to the cavity.

The object of the present invention is to provide a method by which surface-coated, e.g. coloured, moulded articles can be more conveniently produced than in the past.

The present invention provides a method of moulding an article in a mould, the mould having mould cavity walls defining a mould cavity conforming to the shape of said article and the method comprising the steps of:

(a) applying to at least a portion of the mould cavity walls a layer of a curable material destined to form a surface layer of the article;

(b) effecting partial curing of the surface layer forming curable material;

(c) introducing to the mould cavity a curable moulding material destined to be moulded to form the article;

(d) effecting further curing of the surface layer forming curable material and curing of the curable moulding material at least to an extent permitting removal of the moulded article so produced from the mould cavity; and

(e) removing the article from the mould cavity.

The invention can thus provide a moulding method whereby a finish coating of a moulded article can be applied to the article in the course of the moulding operation.

The invention can also provide a moulding method whereby an outer paint or lacquer of a moulded article is applied to a mould wall and is subsequently incorporated into the moulded article as a surface layer.

Further the invention can provide a moulding method whereby a layer destined to be a surface layer of a moulded article is partially cured in a mould cavity prior to addition of further mouldable material and further curing of the partially-cured layer.

Preferably, steps (a) and (b) comprise the steps of applying to the mould cavity wall successive layers of firt and second different surface layer forming curable material, partial curing of the layer of the first material being effected prior to the application of the layer of the second material which is subsequently partially cured.

More preferably, steps (a) and (b) comprise the further steps of applying and partially curing at least one further layer of surface layer forming curable material.

In any case, the said layers can be applied as two or more sub-layers, without significant curing between the applications thereof.

The surface layer forming material or materials may be clear, transparent lacquers or may be pigmented. In particularly preferred methods, a first surface layer forming material is a clear lacquer and a second material, applied after partial curing of a layer of the first material, is pigmented. If desired, one or more further pigmented layers can be applied, each after partial curing of the immediately preceding layer.

The total thickness of the surface layer is preferably in the range of from 0.005in to 0.033in and more preferably in the range from 0.015in to 0.023in.

An embodiment of the invention will now be described by way of example with reference to the drawing of this specification, in which:

Fig. 1 is a cross section through a mould for performing the method of the invention in an "oversize" state and with the material to be moulded introduced, and

Fig. 2 is a section similar to that of Fig. 1 with the mould in fully closed state.

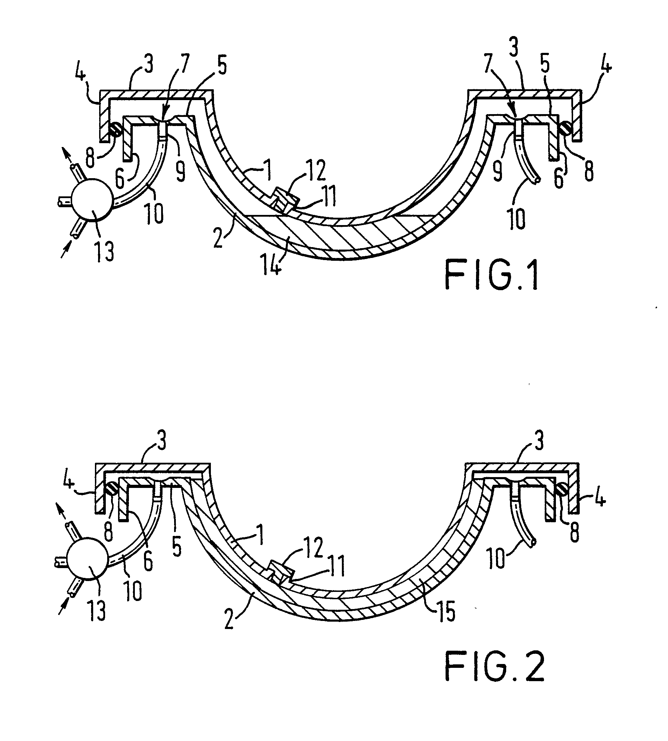

Referring first to Fig. 1, the mould comprises a male part 1 and a female part 2 which, as shown, are shaped for the moulding of an article of simple hemi-spherical shape. It will be appreciated that the mould parts can be of any desired shape to define between them a cavity having the shape of the article it is desired to mould.

The male mould part 1 has, as its uppermost part in the position shown in the drawings, an outwardly extending annular flange 3 which at its outer edge is bent downwardly to form an annular skirt 4. The female part also has a flange 5 bent downwardly to form an annular skirt 6, the flange 5 being formed with a circular groove 7. A sealing ring 8 of rubber or other resilient material is disposed between the overlapping skirts 4 and 6 and is secured to one or the other skirt, preferably the skirt 6. A connection 9 for a vacuum pipe 10 is secured to the flange 5 to open into the groove 7.

At its lowest point the male mould part 1 has a inlet orifice for resin surrounded by a tubular boss 11 into which fits a shouldered stopper 12 the inner end of which is shaped to conform to the curvature of the inner surface of the male mould part so that when the stopper is fully inserted with its shouldered part firmly abutting the edge of boss 11 there is a minimum of discontinuity of the inner surface of mould part 1 at the position of the inlet orifice.

The mould parts are separable from each other and to overcome the frictional resistance to separating movement resulting from the sealing ring 8 it is convenient to include in vacuum pipe 10 a multiway valve 13 of conventional construction which can manipulated between positions in which it respectively applies vacuum, air or gas under pressure, and connection to atmosphere to the pipe 10, so that by manipulation of the valve the mould parts 1 and 2 can be forcibly separated by air under pressure introduced between them through pipe 10.

The use of the illustrated mould to mould an article is generally in accordance with the teaching of Britich Patent Specification 1432333, the contents of which are incorporated herein by reference, but in accordance with the present invention the mould is employed to produce a moulded product complete with a surface coating of paint or other finishing material. Thus in accordance with the invention, prior to establishment of the Figure 1 situation, the moulding surface of the open female mould part 2 is first provided with a coating of release agent or polish, after which one or more layers of curable pigmented or non-pigmented material are sprayed onto the coated mould part or parts. After an appropriate partial curing period, one or more further curable layers are sprayed onto the initial layer or layers. Any required reinforcement structure is then positioned in the mould, and the male mould part 1, also coated with a polish and/or release agent, and treated similarly to the female mould part if the product is to be painted on both sides, is placed in position in the female mould. The resin inlet orifice is closed by the stopper 12 and the valve 13 is then operated so that vacuum from the vacuum source is applied to the volume between the mould parts to draw them together to an initial or "oversized" position shown in Fig. 1. During this operation the skirt 4 rides over the sealing ring 8 maintaining a sliding seal around the whole periphery of the mould. The valve 13 is now operated to release the vacuum inside the mould and the stopper 12 is removed. A measured quantity of freshly mixed thermosetting resin sufficient to form the article to be moulded is now entered into the mould through the inlet orifice uncovered by the removal of stopper 12 and the stopper is replaced and pushed firmly into engagement with boss 11. The resin introduced collects in the lower part of the oversize mould cavity as indicated at 14 in Fig. 1.

The valve 13 is again operated to apply vacuum to pipe 10 and this causes the mould parts 1 and 2 to be drawn towards each other, skirt 4 of mould part 1 sliding over sealing ring 8 to permit such drawing together while maintaining the sealed condition of the mould. As the mould parts move towards each other they squeeze the collection of resin 15 so that is spreads upwardly through the diminishing mould cavity until it reaches the level of the flange 5 of mould part 2. During this squeezing action the application of vacuum can be regulated to ensure a smooth and even spread of the resin. This may be facilitated by having the male mould part formed of translucent material and ensuring that there is a detectable colour difference between the appearance of the mould wherein does not contain resin and where it does contain resin. The level of vacuum required to squeeze the resin to completely fill the effective mould cavity is maintained for a period known, from the properties of the resin mix used, to be sufficient to allow the resin to set to a state where the vacuum can be released.

To remove the finished, moulded article 15 (Fig. 2) from the mould, the valve 13 is operated to apply air under pressure to line 10 and the mould parts 1 and 2 are thus forced apart until skirt 4 is free of sealing ring 8. Thereupon the air pressure can be switched off, the mould part 1 lifted off the mould part 2 and the article lifted out of the mould.

The dwell period required before the mould can safely be opened to release the moulded article depends upon the rate at which the resin mix used will set to form-sustaining state. Since however the process time from the point of mixing the resin to the point where the resin reaches the top of the mould cavity need only be a few minutes, fast-curing resins can be employed and the mould can thus be free for re-use in a relatively short-time.

It will be appreciated that the method of the invention provides accurate control of the reinforcement to resin ratio and the wall thickness in the article being moulded and in the case of a "sandwich" type of article i.e. one having a core of different material between two skirts of resin, the accuracy extends to both skins since these are formed simultaneously in a single moulding operation.

Variation of these factors can readily be effected either by varying the quantity of reinforcement used with a given quantity of resin, or varying the quantity of resin introduced for a given quantity of reinforcement positioned in the mould.

It will further be noted that the article moulded can have its surface coating of lacquer or pigment applied to both its surfaces simultaneously in the one operation.

## EXAMPLES

The following examples are of processes according to the present invention for the production of moulded products complete with surface coatings.

### Example 1

The following materials were used in the formation of a clear outer surface layer:
IP Lacquer 9156 c 8020 2 parts
IP Catalyst 2000 2 0176 1 part
IP Flow Control Agent SR 82 D1/B 2%
Thinners: 2000 6 0178 to give 18s BS4 cup

The following materials were used in the formation of a pigmented surface sub-layer: Colour gel: IP blue metallic gel SR D2 B2 with ethyl acetate to give 30s BS4 cup. Catalysed by 2% Butanox M50 Back-up gel: IP white gel 5619 Y 0005 catalysed by 2% Butanox M50.

The materials designated "IP" are available from International Paints.

The following were used in forming the moulded article:
Glass mat : Vetrotex CSM M1-20 450gm$^{-2}$ Vetrotex CFM U814 450gm$^{-2}$
Epoxy resin : Ciba Geigy LY 1927 GB Ciba Geigy HY 1927 GB
Foam beams : Baxenden DP 8124.
"vetrotex" materials are available from Vetrotex International of Geneva, Switzerland.

The walls of the cavity of a mould having male and female parts were prepared for moulding by coating the male part with Alcosil mould release agent and by applying one coat of polywax polish to the female part and buffing the wax coat to a high gloss.

The following operations were then carried out:

| Operation | Approx. time in minutes |
|---|---|
| (1) Transfer male and female tools to 40°C oven. | |
| (2) Preheat tools in 40°C oven | 120 minimum |
| (3) Transfer female tool to spray booth. | |

(4) Apply lacquer dust coat.

(5) Lacquer dust coat flash off      5

(6) Apply lacquer dry coat
(1 to 2 thou thick)

(7) Lacquer dry coat flash off      10

(8) Apply lacquer wet coat
(1 to 2 thou thick)

(9) Lacquer wet coat flash off      15

(10) Transfer to 40°C oven.      50

(11) Transfer female tool to gel
spray booth.

(12) Cool      10

(13) Apply metallic gel 'heavy'
dust coat.

(14) Metallic gel heavy dust
coat flash off      5

(15) Apply metallic gel 4-6 thou

(16) Metallic gel coat cure      60

(17) Apply back up gel 14-16 thou

(18) Back up gel cure      60
(Includes 30 mins. at 40° to
regain temperature.)

(19) Load tool with glass patterns
maintaining 40°C.

(20) Close tools (Male tool at 40°C.)

(21) Inject resin at 10-12" Hg
vacuum. (All materials/equipment/
mould etc. to be at 40°C during
shot.)

(22) Cure at 40°C      8-9 hours

### Example 2

The materials of example 1 were used with the exception that the epoxy resin was replaced by the following polyester resin:
IP 5567 c 8106 + 1 to 2% Trigonox, giving a 30 minute gel time.

The mould preparation steps and moulding operation of example 1 were then repeated with the modification that the resin was injected at a mould temperature of 18 to 21°C and cured at room temperature for 90 minutes.

Example 3

The materials of example 2 were used with the exception that the following polyester resin was substituted for the resin of example 2:

IP 5567 c 8116 + 2% Trigonox, giving a 10 minute gel time.

The further steps of example 2 were carried out with the modification that the curing period was reduced to 30 minutes.

The terms "dust coat", "dry coat" and "wet coat" mentioned above refer to the apperance of the sprayed coating after spraying, the different appearances being obtained by variation of the speed with the spray gun is passed over the surface being sprayed.

The examples given relate to processes in which only the female mould part is treated in accordance with the invention: in modified processes both parts can be so treated.

It will be appreciated that steps (4) to (10) of the examples constitute the application and partial curing of a first surface layer, steps (13) to (16) application and partial curing of a second surface layer and steps - (17) and (18) application and partial curing of a third surface layer.

**Claims**

1. A method of moulding an article in a mould, the mould having mould cavity walls defining a mould cavity conforming to the shape of said article and the method comprising the steps of:

(a) applying to at least a portion of the mould cavity walls a layer of a curable material destined to form a surface layer of the article;

(b) effecting partial curing of the surface layer forming curable material;

(c) introducing to the mould cavity a curable mould material destined to be moulded to form the article;

(d) effecting further curing of the surface layer forming curable material and curing of the curable moulding material at least to an extent permitting removal of the moulded article so produced from the mould cavity; and

(e) removing the article from the mould cavity.

2. A method according to claim 1, in which steps (a) and (b) comprise the steps of applying to said mould cavity wall successive layers of first and second different surface layer forming curable materials, partial curing of the layer of the first material being effected prior to application of the layer of the second material which is subsequently partially cured.

3. A method according to claim 2, in which the first material is curable to form a clear surface-coating layer.

4. A method according to claim 3, in which the first material is a polyurethane resin.

5. A method according to claim 2 or 3, in which the second material is curable to form a pigmented surface-coating layer.

6. A method according to any of claims 2 to 5, in which steps (a) and (b) include the further step of applying and partially curing at least one further layer of surface layer forming curable material.

7. A method according to claim 6, in which the further layer is of the same material as the second layer.

8. A method according to any preceding claim, in which at least one surface layer forming material is applied in a plurality of applications of sub-layers of the material.

9. A method according to any preceding claim, in which the surface layer forming material is applied by spraying.

10. A method according to any preceding claim, in which the curable moulding material is a polyester resin.

11. A method according to any of claims 1 to 9, in which the curable moulding material is an epoxy resin.

12. A method according to any preceding claim, in which step (c) includes introduction to the mould interior of reinforcing means for the second curable material.

13. A method according to any preceding claim, in which the mould has male and female mould parts, to one of which curable material is applied.

14. A method according to any of claims 1 to 12, in which the mould has male and female mould parts, to both of which curable material is applied.

15. A method according to any preceding claim, in which at least the said portion of the mould cavity walls is coated prior to application of the surface layer forming material with a substance not forming a part of the molded article.

16. A method according to claim 15, in which the substance comprises a polish and/or a release agent.

FIG.1

FIG.2